(19) Europäisches Patentamt / European Patent Office / Office européen des brevets

(11) **EP 2 660 791 A1**

(12) **EUROPEAN PATENT APPLICATION**
published in accordance with Art. 153(4) EPC

(43) Date of publication:
**06.11.2013 Bulletin 2013/45**

(51) Int Cl.:
***G08G 1/00*** *(2006.01)*

(21) Application number: **11853985.7**

(22) Date of filing: **13.12.2011**

(86) International application number:
**PCT/JP2011/078823**

(87) International publication number:
**WO 2012/090703 (05.07.2012 Gazette 2012/27)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.12.2010 JP 2010294240**

(71) Applicant: **Mitsubishi Heavy Industries, Ltd.
Tokyo 108-8215 (JP)**

(72) Inventors:
• **NISHIMAE, Etsuji
Tokyo 108-8215 (JP)**
• **SONODA, Takashi
Tokyo 108-8215 (JP)**
• **ITO, Yoko
Tokyo 108-8215 (JP)**

• **ONO, Hidekazu
Tokyo 108-8215 (JP)**
• **KAMINO, Yuichiro
Tokyo 108-8215 (JP)**
• **OGAWA, Hiroshi
Tokyo 108-8215 (JP)**
• **HIBINO, Hiroshi
Tokyo 108-8215 (JP)**
• **MORISHITA, Keiichi
Hiroshima-shi
Hiroshima 733-0036 (JP)**

(74) Representative: **Henkel, Breuer & Partner
Patentanwälte
Maximiliansplatz 21
80333 München (DE)**

(54) **ROAD TRAFFIC FLOW SIMULATION DEVICE, ROAD TRAFIC FLOW SIMULATION PROGRAM, AND ROAD TRAFFIC FLOW SIMULATION METHOD**

(57) Road traffic flow simulation sets a ratio of the number of electric vehicle models simulating electric vehicles using the remaining amount of power charged in storage batteries thereof as an attribute value thereof to the total number of vehicle models, as well as the number of charging station models for charging the storage batteries of the electric vehicle models and installation positions thereof; calculates the remaining capacity of the storage battery of an electric vehicle model running on a road network model simulating a road network including a plurality of roads and intersections connecting roads; and selects a charging station model for charging the storage battery corresponding to a charging required EV model in which a value based on the calculated remaining capacity of the storage battery is less than a predetermined threshold value. Thus, the road traffic flow simulation can simulate the charging process of the electric vehicle.

FIG. 3

```
              START
                |
    SET ROAD NETWORK MODEL        ~ S100
                |
    INITIALIZE VEHICLE MODEL      ~ S102
                |
    SIMULATE BEHAVIOR             ~ S104
    OF VEHICLE MODEL
                |
          ARE                S106
      ENDING CONDITIONS  ---YES-->
       SATISFIED?
          | NO
    DETERMINE CHARGING NECESSITY  ~ S108
                |
        IS A CHARGING       S110
    REQUIRED ELECTRIC VEHICLE ---NO-->
        MODEL FOUND?
          | YES
    PERFORM SIMULATION SETTING    ~ S112
       FOR CHARGING PROCESS
                |
    OUTPUT SIMULATION RESULTS     ~ S114
                |
              END
```

EP 2 660 791 A1

## Description

{Technical Field}

The present invention relates to a road traffic flow simulation apparatus, a road traffic flow simulation program, and a road traffic flow simulation method.

{Background Art}

Various methods have been proposed as a prediction method (road traffic flow simulation) regarding a traffic movement of vehicles by computer simulation.
For example, Patent Literature 1 discloses a traffic condition prediction apparatus predicting a traffic flow in such a manner that a travel plan for a driver provided with information about the predicted traffic flow is created based on the traffic flow predicted in a road network range generated by traffic environment data based on an OD traffic volume for each predetermined section and traffic environment data, and the experience of the driver for each predetermined section. The OD traffic volume in the predetermined section is corrected based on the travel plan and further the corrected OD traffic volume is used to predict the traffic flow.
In recent years, electric vehicles have started to be introduced (sold to the general public). An increase in penetration rate of the electric vehicles will lead to the need of a charging station for charging a storage battery of an electric vehicle and an accompanying increase in power consumption. Thus, a design for infrastructure development (an optimal number of charging stations and arrangement thereof, and a capacity expansion of the electric power system) is required.

{Citation List}

{Patent Literature}

{PTL 1}
The Publication of Japanese Patent No. 4506663

{Summary of Invention}

{Technical Problem}

However, current road traffic flow simulations do not include simulating charging process of electric vehicles, but include simulating only the charging process of gasoline vehicles. Thus, the current simulations not including the charging process of electric vehicles cannot be used, as is, as an evaluation tool for infrastructure design involving the introduction of electric vehicles. For this reason, there is no effective way to evaluate the validity of the design content for infrastructure design such as an optimal arrangement of charging stations and a capacity expansion of electric power systems. There is no prior evaluation method of desk study, and thus it is after the infrastructure is introduced that the confirmation is made as to whether the design content is valid or not.
In view of the above circumstances, the present invention has been made, and an object of the present invention is to provide a road traffic flow simulation apparatus, a road traffic flow simulation program, and a road traffic flow simulation method capable of simulating charging process of electric vehicles.

{Solution to Problem}

In order to solve the above problem, the road traffic flow simulation apparatus, the road traffic flow simulation program, and the road traffic flow simulation method of the present invention adopt the following solutions.
Specifically, a road traffic flow simulation apparatus according to a first aspect of the present invention is a road traffic flow simulation apparatus simulating running of  vehicle models simulating vehicles in a road network model simulating a road network including a plurality of roads and intersections connecting roads, the road traffic flow simulation apparatus comprising: a setting means for setting a ratio of the number of electric vehicle models simulating electric vehicles using a remaining capacity of power charged in storage batteries thereof as an attribute value to a total number of the vehicle models, as well as the number of charging station models for charging the storage batteries of the electric vehicle models and installation positions thereof; a calculation means for calculating the remaining capacity of the storage battery of the electric vehicle model running on the road network model; a selection means for selecting from the charging station models a charging station model for charging the storage battery corresponding to the electric vehicle model in which a value based on the remaining capacity of the storage battery calculated by the calculation means is less than a predetermined threshold value; and a running simulation means for simulating running of the electric vehicle model required to charge the storage battery up to the charging station model selected by the selection means.

According to the above configuration, the setting means sets the ratio of the number of electric vehicle models simulating electric vehicles using a remaining capacity of power charged in storage batteries thereof as an attribute value to a total number of the vehicle models, as well as the number of charging station models for charging the storage batteries of the electric vehicle models and installation positions thereof.

The calculation means calculates the remaining capacity of the storage battery of the electric vehicle model running on the road network model simulating the road network including a plurality of roads and intersections connecting roads. The selection means selects the charging station model for charging the storage battery corresponding to the electric vehicle model in which the value based on the remaining capacity of the storage battery calculated by the calculation means is less than a predetermined threshold value.

Further, the running simulation means simulates the running of the electric vehicle model required to charge the storage battery up to the charging station model selected by the selection means.

As described above, the configuration can calculate the remaining capacity of the storage battery of the electric vehicle model as an attribute value thereof to cause the electric vehicle model to run up to the charging station selected to charge the storage battery, thus allowing the charging process of the electric vehicle to be simulated.

In the first aspect, if the value based on the time required for charging is equal to or greater than a predetermined value in the charging station model selected by the selection means, it is preferred that another charging station model is newly selected from the charging station models.

The above configuration can simulate the action of a driver for charging an electric vehicle, and thus can more accurately simulate the charging process of the electric vehicle.

In the first aspect, the number of waiting spaces for arranging the electric vehicle models waiting for charging is set in the charging station model. When the number of the electric vehicle models waiting for charging is greater than the number of the waiting spaces in the charging station model, the electric vehicle models preferably are stopped on an adjacent road model.

According to the above configuration, the electric vehicle models waiting for charging exceeding the number of waiting spaces in the charging station model are positioned in an adjacent road model. Thus, the configuration can simulate traffic congestion caused by the electric vehicle models waiting for charging and can more accurately simulate the charging process of the electric vehicles.

In the first aspect, the selection means preferably selects, as the charging station model to be selected, a charging station model nearest from a current position of the electric vehicle model, a charging station model in a range reachable with the remaining capacity of the storage battery and requiring the shortest detour to a destination; or a charging station model in a range reachable with the remaining capacity of the storage battery and having the lowest power sales unit price.

The above configuration can simulate the action of a driver for charging an electric vehicle, and thus can more accurately simulate the charging process of the electric vehicle.

In the first aspect, the calculation means preferably calculates the amount of power consumed by the storage battery based on at least any one of a running speed of the electric vehicle model; an acceleration/deceleration speed, a lamp lighting state, and an air conditioner operating state of the electric vehicle model; and a temperature and a road gradient set in the road network model.

According to the above configuration, the amount of power consumed by the storage battery of the electric vehicle is calculated based on the devices that actually consume power in the electric vehicle, and thus the amount of power consumed by the storage battery can be more accurately calculated.

In the first aspect, an amount of power charged in the storage battery is preferably calculated.

The above configuration can obtain the amount of power consumed by the charging station model.

In the first aspect, the $CO_2$ emission amount of a gasoline vehicle model simulating a gasoline vehicle is preferably calculated based on a preset first setting value and a travel distance of the gasoline vehicle model, and the $CO_2$ emission amount of the electric vehicle model is defined as 0 (zero) or calculated based on a second setting value preset as a value smaller than the $CO_2$ emission amount of the gasoline vehicle model and the amount of power consumed by the storage battery of the electric vehicle model.

The above configuration can quantitatively evaluate the amount of $CO_2$ emitted by a vehicle including an electric vehicle.

In the first aspect, economic benefits caused by constructing the charging stations are preferably calculated based on at least one of a difference in total travel time of the entire vehicle models and a difference in $CO_2$ emission amount thereof in a different number or arrangement of the charging station models.

The above configuration can quantitatively evaluate the economic benefits caused by constructing the charging stations.

In the first aspect, noise of running vehicles is preferably calculated based on a running speed of a gasoline vehicle model simulating a gasoline vehicle and a running speed of the electric vehicle model.

The above configuration can quantitatively evaluate the magnitude of noise caused by running of a vehicle.

In the first aspect, a display means preferably displays a relation between the time required for the electric vehicle model to travel from a starting point to a destination and the number of the charging station models or the arrangement positions thereof.

The above configuration can easily obtain an index for infrastructure facilities, that is, an index for determining the number of charging stations or the arrangement position thereof.

In the first aspect, the display means preferably displays a relation between the number of the charging station models and an amount of power required to be supplied to the charging station models; or a relation between the number of the charging station models and an insufficient amount of power to be supplied to the charging station models.

The above configuration can easily obtain an index for infrastructure facilities, that is, an index for the amount of power required according to the number of charging stations.

A road traffic flow simulation program according to a second aspect of the present invention is a road traffic flow simulation program for use in a road traffic flow simulation apparatus simulating running of vehicle models simulating vehicles in a road network model simulating a road network including a plurality of roads and intersections connecting roads, the road traffic flow simulation program causing a computer to function as: a setting means for setting a ratio of the number of electric vehicle models simulating electric vehicles using a remaining capacity of power charged in storage batteries thereof as an attribute value to a total number of the vehicle models, as well as the number of charging station models for charging the storage batteries of the electric vehicle models and installation positions thereof; a calculation means for calculating the remaining capacity of the storage battery of the electric vehicle model running on the road network model; a selection means for selecting from the charging station models a charging station model for charging the storage battery corresponding to the electric vehicle model in which a value based on the remaining capacity of the storage battery calculated by the calculation means is less than a predetermined threshold value; and a running simulation means for simulating running of the electric vehicle model required to charge the storage battery up to the charging station model selected by the selection means.

The above configuration calculates the remaining capacity of the storage battery, which is an attribute value of the electric vehicle model, to cause the electric vehicle model to run up to the charging station selected to charge the storage battery, and thus can simulate the charging process of the electric vehicle.

A road traffic flow simulation method according to a third aspect of the present invention is a road traffic flow simulation method for simulating running of vehicle models simulating vehicles in a road network model simulating a road network including a plurality of roads and intersections connecting roads, the road traffic flow simulation method comprising: a first step of setting a ratio of the number of electric vehicle models simulating electric vehicles using a remaining capacity of power charged in storage batteries thereof as an attribute value to a total number of the vehicle models, as well as the number of charging station models for charging the storage batteries of the electric vehicle models and installation positions thereof; a second step of calculating the remaining capacity of the storage battery of the electric vehicle model running on the road network model; a third step of selecting from the charging station models a charging station model for charging the storage battery corresponding to the electric vehicle model in which a value based on the remaining capacity of the storage battery calculated by the second step is less than a predetermined threshold value; and a fourth step of simulating running of the electric vehicle model required to charge the storage battery up to the charging station model selected by the third step.

The above configuration calculates the remaining capacity of the storage battery, which is an attribute value of the electric vehicle model, to cause the electric vehicle model to run up to the charging station selected to charge the storage battery, and thus can simulate the charging process of the electric vehicle.

{Advantageous Effects of Invention}

The present invention has an excellent effect of simulating the charging process of the electric vehicle.

{Brief Description of Drawings}

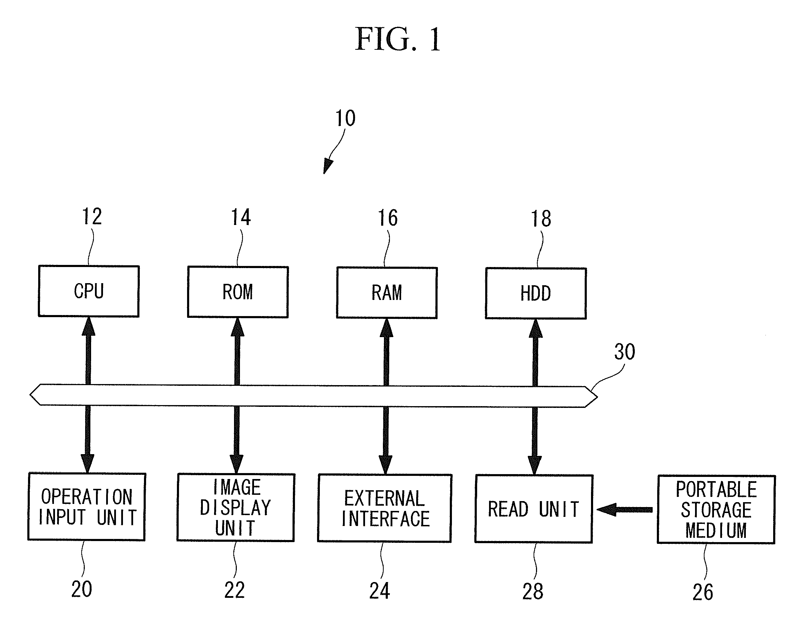

{Fig. 1}
Fig. 1 illustrates a schematic configuration of main components of an electrical system of a road traffic flow simulation apparatus according to a first embodiment of the present invention.

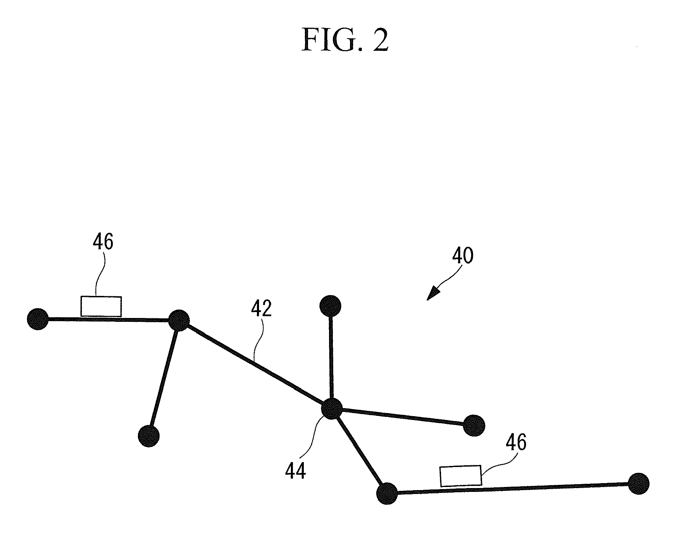

{Fig. 2}
Fig. 2 is a schematic view illustrating a configuration of a road network model for road traffic flow simulation according to the first embodiment of the present invention.
{Fig. 3}
Fig. 3 is a flowchart illustrating a process flow of a road traffic flow simulation program according to the first embodiment of the present invention.
{Fig. 4}
Fig. 4 is a schematic view illustrating a difference in model to be selected according to the first embodiment of the present invention.
{Fig. 5}
Fig. 5 is a schematic view when a charging required EV model according to the first embodiment of the present invention is stopped on a link which is an adjacent road model.
{Fig. 6}
Fig. 6 is a graph illustrating an example of Q-K characteristics according to the first embodiment of the present invention.
{Fig. 7A}
Fig. 7A is a graph illustrating a Q-K characteristic in a sunny weather according to the first embodiment of the present invention.
{Fig. 7B}
Fig. 7B is a graph illustrating a Q-K characteristic in a rainy weather according to the first embodiment of the present invention.
{Fig. 7C}
Fig. 7C is a graph illustrating a Q-K characteristic in a snowy weather according to the first embodiment of the present invention.
{Fig. 8A}
Fig. 8A is a graph illustrating a relation between the total travel time of an electric vehicle model and the number of charging station models, which is a result obtained by the road traffic flow simulation according to the first embodiment of the present invention.
{Fig. 8B}
Fig. 8B is a graph illustrating a relation between the total travel time of an electric vehicle model and the arrangement position of charging station models, which is a result obtained by the road traffic flow simulation according to the first embodiment of the present invention.
{Fig. 9}
Fig. 9 is a schematic view illustrating divided areas of a road network model and a power transmission and distribution system according to a second embodiment of the present invention.
{Fig. 10}
Fig. 10 is a graph illustrating an example of a time variation of load power set as another load for each divided area according to the second embodiment of the present invention.
{Fig. 11}
Fig. 11 is a graph illustrating a relation between the time and the amount of charge power to indicate a charging process of an electric vehicle model according to the second embodiment of the present invention.
{Fig. 12A}
Fig. 12A is a graph illustrating a time variation of load, more specifically, a time variation of load for each divided area according to the second embodiment of the present invention.
{Fig. 12B}
Fig. 12B is a graph illustrating a time variation of load, more specifically, a time variation of load of the entire city simulated by the road network model according to the second embodiment of the present invention.
{Fig. 13A}
Fig. 13A is a graph illustrating a relation between the required total power supply and the number of charging station models, which is a result obtained by the road traffic flow simulation according to the second embodiment of the present invention.
{Fig. 13B}
Fig. 13B is a graph illustrating a relation between the power shortage percentage and the number of charging station models, which is a result obtained by the road traffic flow simulation according to the second embodiment of the present invention.
{Fig. 14A}
Fig. 14A is a schematic view illustrating the position of noise evaluation point A to describe a third modification of the present invention.

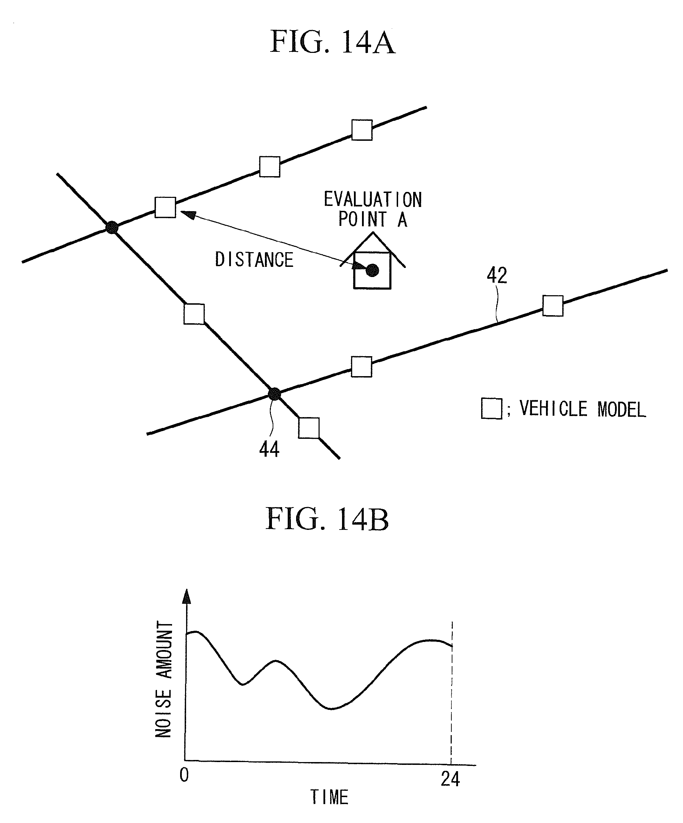

{Fig. 14B}
Fig. 14B is a graph illustrating a variation in the amount of noise to the time in the human auditory to describe the third modification of the present invention.

{Description of Embodiments}

Now, an embodiment of a road traffic flow simulation apparatus, a road traffic flow simulation program, and a road traffic flow simulation method according to the present invention will be described with reference to the accompanying drawings.

(First embodiment)

Now, a first embodiment of the present invention will be described with reference to Fig. 1.

Fig. 1 illustrates a schematic configuration of main components of an electrical system of a road traffic flow simulation apparatus 10 according to the first embodiment of the present invention.
The road traffic flow simulation apparatus 10 according to the first embodiment executes a road traffic flow simulation for simulating running of vehicle models simulating vehicles in a road network model (also see Fig. 2) simulating a road network including a plurality of roads and intersections connecting roads.

Note that the vehicle model according to the first embodiment includes an electric vehicle model simulating an electric vehicle. Note also that in the following description, the term "vehicle" includes both a gasoline vehicle and an electric vehicle.

Note also that the term "road" has no limitation on the number of traffic lanes and the number of right/left turn lanes, and further includes any road on which a vehicle can run, such as a paved road, an unpaved road, a national road, a prefectural road, a private road, and a parking lot.
Of the vehicle, the term "gasoline vehicle" includes motorcycles, ordinary vehicles (including taxis), buses, trucks and the like, driven by gasoline.
Meanwhile, the term "electric vehicle" includes any vehicles having a chargeable storage battery, such as motorcycles, ordinary vehicles (including taxis), buses, and trucks driven by electric power as well as gasoline-electric hybrid vehicles (hybrid vehicles of the above various vehicles).

The road traffic flow simulation apparatus 10 includes a CPU (Central Processing Unit) 12 for controlling the entire operation of the road traffic flow simulation apparatus 10; a ROM (Read Only Memory) 14 for preliminarily storing various programs and various parameters; a RAM (Random Access Memory) 16 for use in a work area or the like when the CPU 12 executes various programs; and an HDD (Hard Disk Drive) 18 as a storage means for storing various programs such as a road traffic flow simulation program described later in detail and various types of information.

The road traffic flow simulation apparatus 10 further includes an operation input unit 20 which includes a keyboard, a mouse, and the like to receive an input of various operations; an image display unit 22 which displays an image for prompting an input of various types of information required for road traffic flow simulation, an image for displaying results of the road traffic flow simulation, and other various images; an external interface 24 which is connected to an external device such as a printer and another computer to send and receive various types of information to and from the external device; and a read unit 28 for reading information stored in a portable storage medium 26. Note that the portable storage medium 26 includes a magnetic disk, a CD (Compact Disc), an optical disk such as a DVD (Digital Versatile Disc), an IC (Integrated Circuit) card, a memory card, and others.

The CPU 12, the ROM 14, the RAM 16, the HDD 18, the operation input unit 20, the image display unit 22, the external interface 24, and the read unit 28 are electrically connected to each other through a system bus 30. Thus, the CPU 12 can access the ROM 14, the RAM 16, and the HDD 18; can grasp an operation state on the operation input unit 20; can display various images on the image display unit 22; can send and receive various types of information to and from the external device through the external interface 24; and can read information from the portable storage medium 26 through the read unit 28.

Note that the configuration of the road traffic flow simulation apparatus 10 illustrated in Fig. 1 is just an example thereof, and other configurations may be used such that a large-capacity semiconductor memory device may be used instead of the HDD 18, and the road traffic flow simulation program may be stored in the portable storage medium 26.

Fig. 2 is a schematic view of a road network model 40 for road traffic flow simulation according to the first embodiment.

In the road network model 40, a link 42 which is a road model simulating a minimum section of a road delimited by intersections is connected to a node 44 simulating an intersection. Note that the road network model 40 may simulate an existing road network or a non-existent road network.

The number of traffic lanes, the presence or absence and the number of right/left turn lanes, and the like are set to each link 42. The presence or absence of installation of a traffic signal model simulating a vehicle traffic signal is set to each node 44.

An altitude can be set to each link 42 and each node 44. Thus, a road gradient simulated by the link 42 can be determined from an altitude difference between the adjacent link 42 and node 44. In addition, a different altitude can be set in the middle of the link 42.

The traffic signal model changes from blue to yellow, from yellow to red, and from red to blue in a predetermined time interval. When the traffic signal model is blue, the vehicle model is permitted to move from a link 42 to another link 42 through the node 44 in which the traffic signal model is installed, while when the traffic signal model is red, the vehicle model is prohibited from moving from a link 42 to another link 42 through the node 44 in which the traffic signal model is installed.

Further, in the road network model 40 according to the first embodiment, a charging station model 46 simulating a charging station for charging a storage battery of an electric vehicle model can be arranged adjacent to the link 42.

In addition, weather conditions (sunny, rainy, or snowy), the temperature (hereinafter referred to as "outside air temperature"), the time period simulated for road traffic flow simulation, and the like are set in the road network model 40.

The electric vehicle model has the remaining charge capacity of the storage battery as an attribute value thereof. Meanwhile, the gasoline vehicle model simulating a gasoline vehicle does not have the remaining capacity of the storage battery as an attribute value thereof.

In addition, the number of simultaneously chargeable electric vehicle models (number of charging stands), the number of waiting spaces for arranging the electric vehicle models waiting for charging, and the sales unit price of electric power (hereinafter referred to as "power sales unit price") are set to each charging station model 46.

Note that in the first embodiment, the road network model 40 may be preliminarily created and stored, for example, in the HDD 18.

Now, the road traffic flow simulation according to the first embodiment will be described.

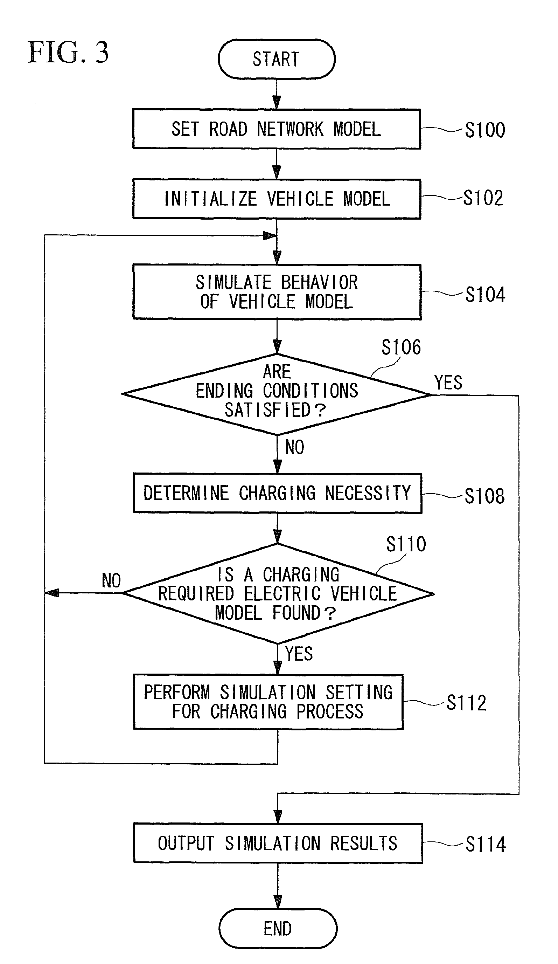

Fig. 3 is a flowchart illustrating a process flow of a road traffic flow simulation program to be executed by the CPU 12. The road traffic flow simulation program is preliminarily stored in a predetermined region of the HDD 18. Note that when an operator inputs an execution instruction through the operation input unit 20, the road traffic flow simulation program starts execution.

First, in step 100, the road network model 40 is set.

Specifically, the link 42 is connected to the node 44; the traffic lanes and right/left turn lanes of the link 42 are set; the time intervals in which the traffic signal model changes colors are set; and various values about the road network model 40 are set.

The settings of the road network model 40 further include the number of charging station models 46, installation positions thereof, and a value related to each charging station model 46.

The settings of the road network model 40 further include a ratio of the number of electric vehicle models to the total number of vehicle models.

Further, in this step, conditions for ending the road traffic flow simulation program are set. Examples of the ending conditions include a simulation execution time, an event when all vehicle models or a preset vehicle model reaches the destination, and other events.

Then, in step 102, the vehicle model is initialized.

Specifically, the starting place and destination (O-D information) of each vehicle model and the start time are set. Further, the charge capacity of the storage battery is set as an attribute value of each electric vehicle model.

Note that various settings performed in steps 100 and 102 include numerical values inputted by an operator through the operation input unit 20. Note also that in steps 100 and 102, the various settings may be performed in such a manner that the road network model 40 preliminarily storing the various settings are read from the HDD 18.

Then, in step 104, the behavior of vehicle models, namely, the running of each vehicle model is simulated for each predetermined time interval on the road network model 40. Note that the predetermined time interval is a time interval for road traffic flow simulation and may be different from the actual time interval.

The vehicle model running state is calculated from the weather condition set to the road network model 40, the number of vehicle models running on each link 42 (traffic congestion situation), and the like. Any method known in the art may be used as a specific calculation method. When the traffic signal of the traffic signal model is red, the running of the vehicle models is stopped at the signal, and the stop time of each vehicle model is calculated from a queuing model simulating the state in which a plurality of vehicle models are continuously stopped.

Here, in the first embodiment, the remaining capacity of the storage battery (hereinafter referred to as "remaining storage battery capacity") of the electric vehicle model is calculated with the simulation of the running of the vehicle model.

An example of the method of calculating the remaining storage battery capacity includes a model expression shown in the following expression (1).

$$\text{Current-time remaining storage battery capacity =}$$

$$\text{previous-time remaining storage battery capacity - per-unit-}$$

$$\text{time storage battery consumption ... (1)}$$

The "previous-time remaining storage battery capacity" in expression (1) is the remaining storage battery capacity when the behavior of the vehicle model is calculated previously.

The "per-unit-time storage battery consumption" is calculated, for example, by any one of the consumption calculation models 1 to 3 listed in the following Table 1. Note that the consumption calculation models 1 to 3 are just examples, and thus, as long as a term related to the running speed of the electric vehicle model is used, another consumption calculation model not using part of the other terms contained in the consumption calculation models 1 to 3 or a consumption calculation model newly adding a different term may be used.

{Table 1}

| consumption calculation model 1 | per-unit-time storage battery consumption = A × running speed + B × lamp lighting state + C × air conditioner operating state + D × outside air temperature + E × gradient + F (A to F is a fixed parameter) |
|---|---|
| consumption calculation model 2 | per-unit-time storage battery consumption = A × running speed + B × acceleration/deceleration speed + C × lamp lighting state + D × air conditioner operating state + E × outside air temperature + F × gradient + G (A to G is a fixed parameter) |
| consumption calculation model 3 | per-unit-time storage battery consumption = function f (running speed, acceleration/deceleration speed, lamp lighting state, air conditioner operating state, outside air temperature, and gradient) |

Each fixed parameter in the consumption calculation models 1 and 2 is used as a weight to each term.

The lamp lighting state is a value based on the number of lighting lamps of the electric vehicle different depending on the time period simulated by the road traffic flow simulation. The air conditioner operating state is a value based on the difference between the temperature of the air conditioner of the electric vehicle and the outside air temperature preliminarily set as a setting value of the road network model 40.

When the lamp of the electric vehicle model is off, the lamp lighting state is a value of 0 (zero). When the air conditioner of the electric vehicle model is off, the air conditioner operating state is a value of 0 (zero).

The consumption calculation models 1 to 3 calculate the storage battery consumption according to the outside air temperature. The reason why the storage battery consumption calculation expression includes the outside air temperature is that the amount of discharge from the storage battery changes depending on the temperature.

Further, the consumption calculation models 2 and 3 calculate the storage battery consumption according to the acceleration/deceleration speed of the electric vehicle. When the electric vehicle accelerates, the storage battery is discharged, while when the electric vehicle decelerates, the storage battery is charged. In view of this, in the consumption calculation models 2 and 3, when the electric vehicle model accelerates from the previous time to the current time, the sign of the acceleration/deceleration speed is set to positive; when the electric vehicle model decelerates from the previous time to the current time, the sign of the acceleration/deceleration speed is set to negative; and when the electric vehicle model does not accelerate or decelerate from the previous time to the current time, the sign of the acceleration/deceleration speed is set to 0 (zero).

As described above, the road traffic flow simulation according to the first embodiment calculates the storage battery consumption of an electric vehicle model based on the devices and the like consuming power in an actual electric vehicle, and thus can more accurately simulate the storage battery consumption.

Then, in step 106, a determination is made as to whether the preset ending conditions are satisfied or not. If a positive determination is made, the process moves to step 114, while if a negative determination is made, the process moves to step 108.

In step 108, a charging necessity determination is made as to whether the storage battery of the electric vehicle model is required to be charged or not.

The charging necessity determination determines that the storage battery of the electric vehicle model is required to be charged when the value based on the remaining storage battery capacity calculated in step 104 is less than a predetermined threshold value.

The value based on the remaining storage battery capacity is a value obtained by dividing the remaining storage battery capacity by a full charge capacity, that is, a maximum charge capacity of the storage battery. A specific charging necessity determination is made by the charging necessity determination models 1 to 3 listed in the following Table 2.

{Table 2}

| charging necessity determination model 1 | remaining storage battery capacity/ full charge capacity < threshold A (for example, A = 10%) |
| charging necessity determination model 2 | remaining storage battery capacity/ full charge capacity < threshold A (for example, A = 30%) and remaining storage battery capacity < travel distance to destination $\times$ fuel consumption + allowance |
| charging necessity determination model 3 | remaining storage battery capacity/ full charge capacity < threshold A (for example, A = 50%) and find available charging station during travel |

In the road traffic flow simulation according to the first embodiment, the CPU 12 randomly sets the charging necessity determination models 1 to 3 to each electric vehicle model, and a charging necessity determination model set to each electric vehicle model is used to perform a charging necessity determination. However, the present invention is not limited to this, and instead of randomly setting the charging necessity determination models 1 to 3 to each electric vehicle model by the CPU 12, an operator may individually set the charging necessity determination models 1 to 3 to each electric vehicle model. Further, any one or two of the charging necessity determination models 1 to 3 may be used and another charging necessity determination model may be used.
As described above, the charging necessity determination  models 1 to 3 simulate the action of a driver for charging an electric vehicle, and thus can more accurately simulate the charging process of the electric vehicle.

Then, in step 110, based on the results of the charging necessity determination executed in step 108, a determination is made as to whether there is an electric vehicle model required for charging (hereinafter referred to as a "charging required EV model") or not. If a positive determination is made, the process moves to step 112, while if a negative determination is made, the process returns to step 104.

Then, in step 112, simulation setting for simulating the charging process of a charging required EV model is performed.
The simulation setting for the charging process includes selecting a charging station model for charging the storage battery corresponding to the charging required EV model and deriving a route up to the charging station.

Specific methods of selecting a charging station model include selection models 1 to 3 listed in the following Table 3.

{Table 3}

| selection model 1 | select charging station model nearest from current position of charging required EV model |
| selection model 2 | select charging station model in range reachable with remaining storage battery capacity and requiring shortest detour to destination |
| selection model 3 | select charging station model in range reachable with remaining storage battery capacity and having lowest power sales unit price |

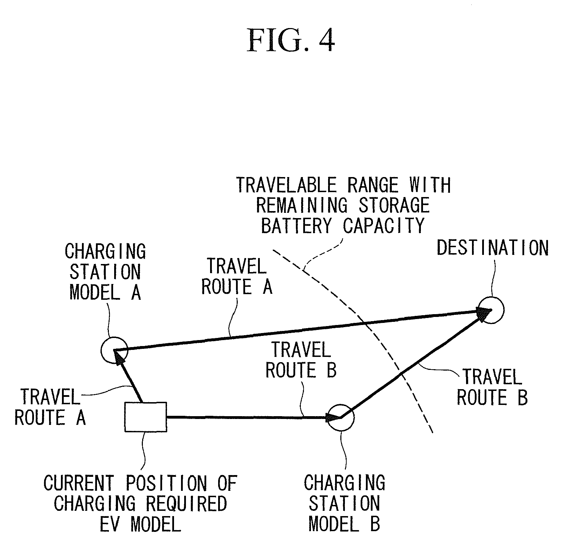

Fig. 4 is a schematic view illustrating an example of a difference between selection model 1 and selection model 2. In Fig. 4, selection model 1 corresponds to a case of selecting charging station model A, and selection model 2 corresponds to a case of selecting charging station model B. In comparison with selection model 2, selection model 1 has a shorter travel distance to reach the charging station model 46, but has a longer travel distance from the current position to the destination (travel route A). In contrast to this, in comparison with selection model 1, selection model 2 has a longer travel distance to reach the charging station model 46, but has a shorter travel distance from the current position to the destination, that is, a shorter detour route (travel route B).

The power sales unit price in selection model 3 is a power sales unit price set as a setting value of each charging station model.

In the road traffic flow simulation according to the first embodiment, the CPU 12 randomly sets the selection models 1 to 3 to each charging required EV model, and a selection model set to each charging required EV model is used to perform a charging necessity determination. Alternatively, without being limited to the configuration in which the CPU 12 randomly sets the selection models 1 to 3 to each charging required EV model, an operator may individually set the selection models 1 to 3 to each charging required EV model. Further, any one or two of the selection models 1 to 3 may be used and another selection model may be used.

As described above, the selection models 1 to 3 simulate the action of a driver for charging an electric vehicle, and thus can more accurately simulate the charging process of the electric vehicle.

Then, in step 112, a new travel route (travel route A or travel route B in an example of Fig. 4) is set to pass the selected charging station model 46 to reach the destination. When the simulation setting of the charging process is completed, the process returns to step 104.

In step 104, as described above, the running of the vehicle model is simulated, and at the same time, when there is a charging required EV model, the running of the charging required EV model is simulated through the travel route set in step 112 up to the charging station model 46.

Here, in step 104, the charging required EV model reaches the charging station model selected in step 112. However, if the charging station model is congested, that is, if the charging station model has charging required EV models exceeding the number of simultaneously chargeable EV models and thus the time to wait for charging occurs, a charging station movement determination is made whether the reached charging required EV model is to be moved to a different charging station model or not.

When a value based on the time required for charging is equal to or greater than a predetermined value in the charging station model 46 selected in step 112, the charging station movement determination determines to newly select another charging station model 46.

A specific charging station movement determination is made by movement determination models 1 and 2 listed in the following Table 4.

{Table 4}

| movement determination model 1 | distance to charging station model Y is in range reachable with remaining storage battery capacity and parameter P × number of waiting vehicle models at charging station model X/number of simultaneously chargeable vehicle models at charging station model X > threshold Q |
| --- | --- |
| movement determination model 2 | distance to charging station model Y is in range reachable with remaining storage battery capacity and travel distance to charging station model Y < parameter P × number of waiting vehicle models at charging station model X/number of simultaneously chargeable vehicle models at charging station model X - parameter R |

In movement determination models 1 and 2, charging station model X is the charging station model 46 selected in step 112, that is, the charging station model 46 reached by the charging required EV model, and charging station model Y is a newly selected charging station model 46. Note that the new charging station model Y is selected by the above selection models 1 to 3.

In movement determination models 1 and 2, parameter P is an average charging time of each charging required EV model, and the average charging time is calculated based on the difference between a remaining capacity of the storage battery of the charging required EV model and a full charge capacity thereof. Specifically, in movement determination models 1 and 2, a quotient is obtained by dividing the number of waiting vehicles by the number of simultaneously chargeable vehicles at charging station model X, and the quotient is multiplied by parameter P to produce the time required for charging in the charging station model 46.

In movement determination model 2, parameter R is a value indicating a congestion degree of the charging required EV models at charging station model X. For example, parameter R is determined so as to increase in value according to the number of charging required EV models waiting for charging at charging station model X. In other word, the more the number of charging required EV models waiting for charging at charging station model X, the larger the value of parameter P, and the smaller the value on the right side of inequality of movement determination model 2. Thus, the charging station movement determination is likely to determine that the charging required EV model is required to move to the new charging station model Y.

In the road traffic flow simulation according to the first embodiment, the CPU 12 randomly sets movement determination models 1 and 2 to each charging required EV model, and a movement determination model set to each charging required EV model is used to perform a charging necessity determination. Alternatively, without being limited to the configuration in which the CPU 12 randomly sets movement determination models 1 and 2 to each charging required EV model, an operator may individually set movement determination models 1 and 2 to each charging required EV model. Further, any one of movement determination models 1 and 2 may be used and another movement determination model may be used.

As described above, movement determination models 1 to 3 simulate the action of a driver for charging an electric vehicle, and thus can more accurately simulate the charging process of the electric vehicle.

Now, a case of occurrence of a charging required EV model waiting for charging at a charging station model 46 will be described.

In the road traffic flow simulation according to the first embodiment, when charging required EV models exceeding the number of simultaneously chargeable vehicle models are located at the charging station model 46, that is, when the charging station model is congested, the charging wait time of a charging required EV model waiting for charging is calculated by a queuing model.

When the number of charging required EV models waiting for charging at the charging station model 46 exceeds the number of waiting spaces set as the setting value of the charging station model 46, the road traffic flow simulation stops the charging required EV model on a link 42 which is an adjacent road model.

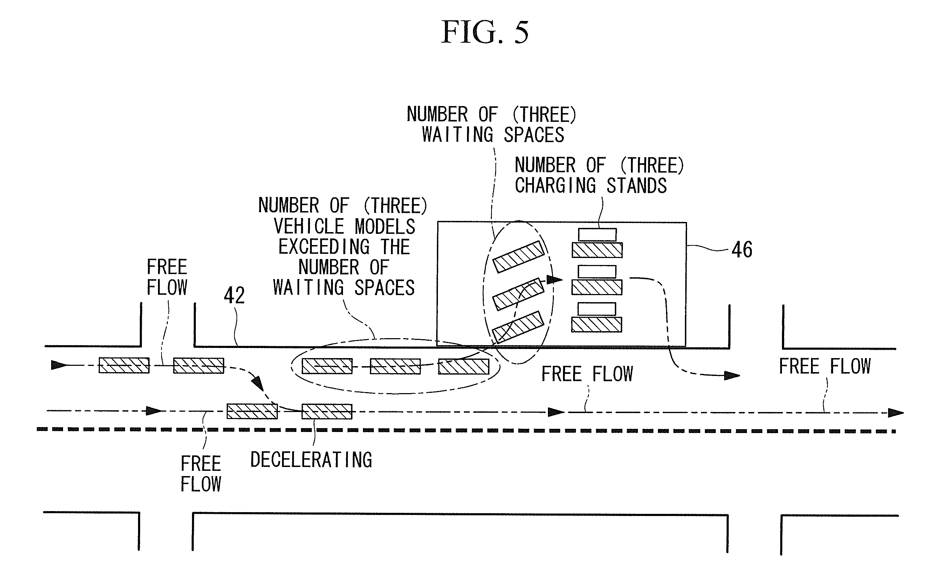

Fig. 5 is a schematic view when charging required EV models are stopped on the adjacent link 42. In an example of Fig. 5, the number of simultaneously chargeable vehicle models (the number of charging stands) and the number of waiting spaces of the charging station model 46 are three, and all the charging stands and waiting spaces are occupied by charging required EV models. Thus, charging required EV models exceeding the number of waiting spaces are located on the adjacent link 42.

The link 42 has two traffic lanes. The charging required EV models are located on a traffic lane at the side of the charging station model 46, while vehicle models are running on other traffic lanes (free flow). The free flow extends to the vicinity of the rear end of EVs of the charging required EV models located on the link 42. When a vehicle model reaches the vicinity of the rear end of the EVs, the EV is required to move to the other adjacent traffic lane.

Thus, a place of the link 42 on which the charging required EV models are located and a place adjacent to the place are congested with decelerating vehicle models, leading to a high density state of vehicle models simulating traffic congestion.

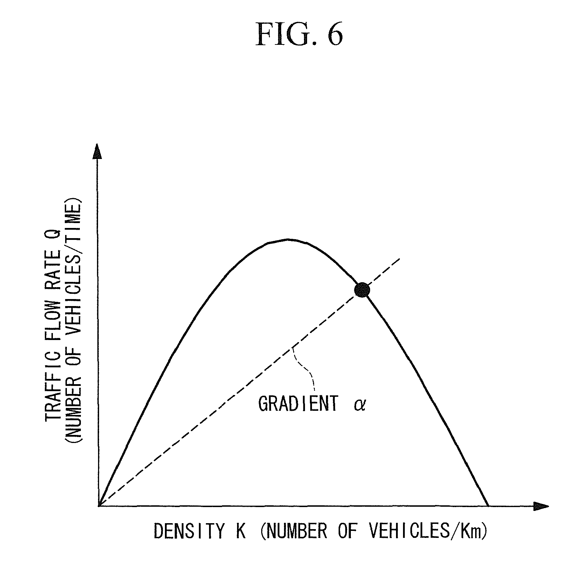

The speed of the vehicle model running on the link 42 simulating traffic congestion is calculated by Q-K characteristics indicated by a Q-K curve illustrated in Fig. 6.

The Q-K characteristics indicate a relation between traffic flow rate Q (the number of vehicles/time) and density K (the number of vehicles/km), namely, road characteristics. In addition, gradient $\alpha$ of a line connecting the origin and a point on the Q-K curve indicates running speed V (km/time).

As described above, the road traffic flow simulation according to the first embodiment causes the charging required EV models exceeding the number of waiting spaces of the charging station model 46 to be located on the adjacent link 42, thus can simulate traffic congestion caused by electric vehicle models waiting for charging, and thus can more accurately simulate the charging process of the electric vehicle.

In addition, the road traffic flow simulation according to the first embodiment switches the Q-K characteristics according to the weather condition preliminarily set as a setting value.

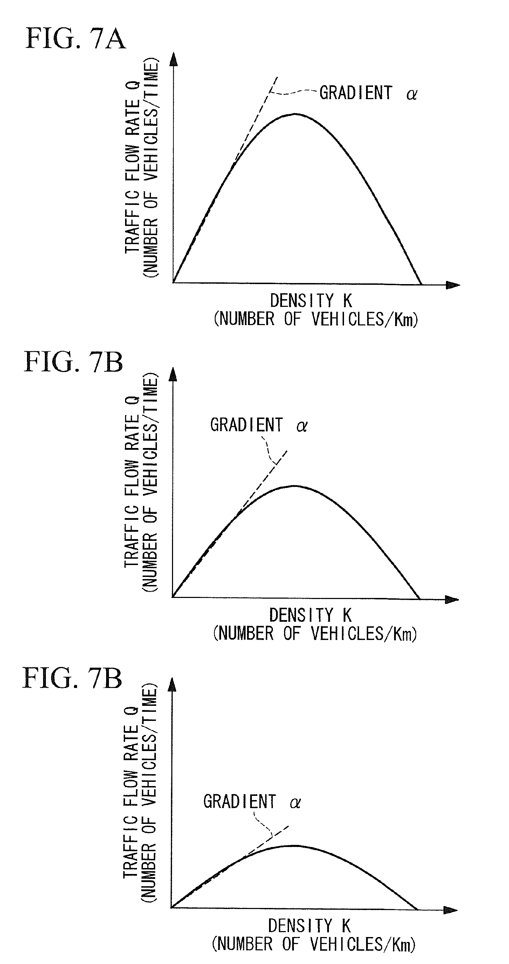

Figs. 7A to 7C illustrate examples of Q-K characteristics different according to the weather condition. Fig. 7A illustrates a Q-K characteristic in a sunny weather. Fig. 7B illustrates a Q-K characteristic in a rainy weather. Fig. 7C illustrates a Q-K characteristic in a snowy weather.

As illustrated in Figs. 7A to 7C, the link capacity, which is a maximum value of traffic flow rate Q, decreases in the order of sunny, rainy, and snowy. This indicates that the running speed of a vehicle model increases in the order of sunny, rainy, and snowy.

Note that weather conditions in the road traffic flow simulation may be fixed as a preset setting value as described above, or a weather condition switching parameter may be preset and weather conditions may be switched based on the parameter. Note that the parameter to switch weather conditions may be set on a per-hour or per-day basis, or may be randomly set.

As described above, the road traffic flow simulation according to the first embodiment repeats the process from step 104 to step 112 until the ending conditions are satisfied.

Then, if a determination is made in step 106 that the ending conditions are satisfied, the road traffic flow simulation moves to step 114 as described above.

In step 114, the road traffic flow simulation outputs simulation results and ends the program. For example, the simulation results are considered to be outputted in such a manner that the time (hereinafter referred to as "travel time") required for each vehicle model to reach a destination from a starting place and the travel distance required for each vehicle model to reach the destination from the starting place are calculated; and the calculation results are displayed as a graph or the like on the image display unit 22, stored as data in the HDD 18, printed on a recording paper by a printer connected via the external interface 24, or the like.

Note that specific examples of the calculated travel time include a total travel time of all gasoline vehicle models, an average travel time per gasoline vehicle model, a total travel time of all electric vehicle models, an average travel time per electric vehicle model, a total travel time of all gasoline vehicle models and electric vehicle models, and an average travel time per gasoline vehicle model and electric vehicle model, and the like.

Note also that specific examples of the calculated travel distance include a total travel distance of all gasoline vehicle models, an average travel distance per gasoline vehicle model, a total travel distance of all electric vehicle models, an average travel distance per electric vehicle model, a total travel distance of all gasoline vehicle models and electric vehicle models, an average travel distance per gasoline vehicle model and electric vehicle model, and the like.

Further, in the road traffic flow simulation according to the first embodiment, parameters are changed in a stepwise fashion such that the ratio of electric vehicle models included in vehicle models set in step 100, or at least one of the number of charging station models 46 and the arrangement position of the charging station models 46 set in step 100 are different. Then, an optimal number of charging station models 46, arrangement position thereof, and the like can be derived by simulating the running of electric vehicle models a plurality of times.

For example of the stepwise changing, the ratio of the electric vehicle models is changed from 0% to 100% in steps of 10%; a plurality of areas for arranging the charging station models 46 are preset and the number of charging station models 46 to be arranged in the area is changed in a stepwise  fashion; the charging station models 46 are evenly arranged in the area; more number of charging station models 46 are arranged on higher traffic volume roads; or charging station models 46 are arranged in proportion to the traffic volume.

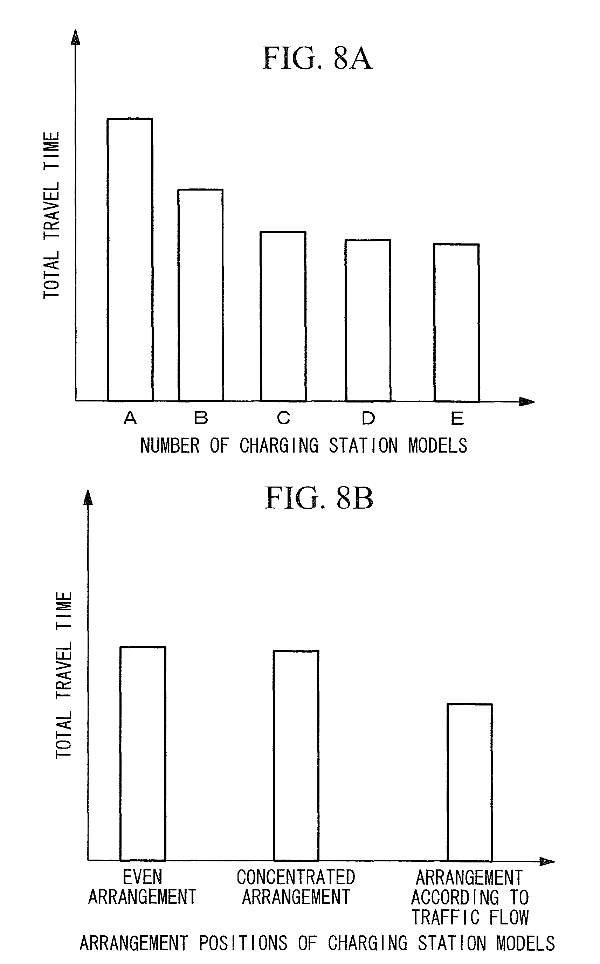

Figs. 8A and 8B illustrate an example of a result obtained by changing the parameters in a stepwise fashion.

Fig. 8A is a graph illustrating a relation between the total travel time of an electric vehicle model and the number of charging station models 46 obtained by the road traffic flow simulation. The total travel time is a time required for an electric vehicle model to reach a destination from a starting place. In an example of Fig. 8A, it is understood that an increase in the number of charging station models 46 from C to D does not greatly reduce the total travel time. Thus, it can be determined that D or more number of actually installed charging stations may cause excessive capital investment.

Fig. 8B is a graph illustrating a relation between the total travel time of an electric vehicle model and the arrangement position of charging station models 46 obtained by the road traffic flow simulation. In an example of Fig. 8B, it can be determined that an arrangement of charging stations  according to traffic flow is more effective in comparison with an even arrangement and a concentrated arrangement.

Thus, an index for determining infrastructure facilities, that is, the number of charging stations or arrangement positions thereof can be easily obtained based on the results of road traffic simulation by the graphs illustrating a relation between the total travel time of an electric vehicle model and the number of charging station models or arrangement positions thereof.

Note that Figs. 8A and 8B are displayed on the image display unit 22, but the relation between the total travel time of an electric vehicle model and the number of charging station models or arrangement positions thereof is not limited to the graphs of Figs. 8A and 8B. For example, the relation may be displayed in a tabular form on the image display unit 22.

As described above, the road traffic flow simulation according to the first embodiment sets the ratio of the number of electric vehicle models to the total number of vehicle models, the number of charging station models for charging the storage battery of the electric vehicle model and an installation position thereof in step 100. Then, in step 108, the road traffic flow simulation calculates the remaining  capacity of the storage battery of the electric vehicle model running on the road network model 40. Then, in step 112, the road traffic flow simulation selects the charging station model 46 for charging the storage battery corresponding to the charging required EV model in which the value based on the calculated remaining capacity of the storage battery is less than a predetermined threshold value.

Thus, the road traffic flow simulation according to the first embodiment can simulate the charging process of the electric vehicle.

(Second embodiment)

Now, the second embodiment of the present invention will be described.

Note that the configuration of a road traffic flow simulation apparatus 10 and a road network model 40 according to the second embodiment is the same as the configuration of the road traffic flow simulation apparatus 10 and the road network model 40 according to the first embodiment illustrated in Figs. 1 and 2, and thus the description thereof will be omitted.

The process flow of a road traffic flow simulation program according to the second embodiment is the same as the  process flow of the road traffic flow simulation program according to the first embodiment illustrated in Fig. 3, and thus with reference to Fig. 3, the road traffic flow simulation program according to the second embodiment will be described.

In the road traffic flow simulation according to the second embodiment, in step 100 as the setting of the road network model 40, not only various settings as described in the first embodiment are set, but also the road network model 40 is divided into a plurality of areas and the amount of power that can be supplied to the charging station model 46 is set in the areas.

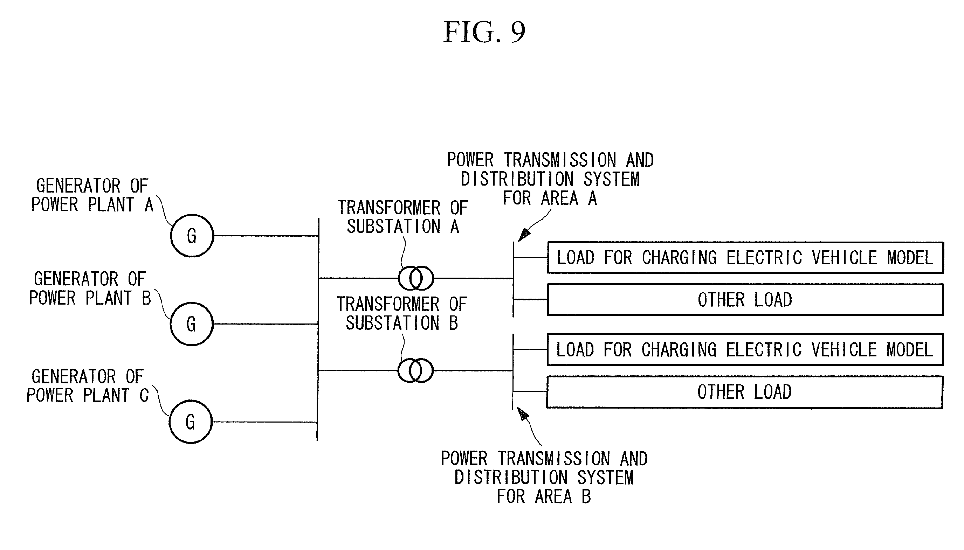

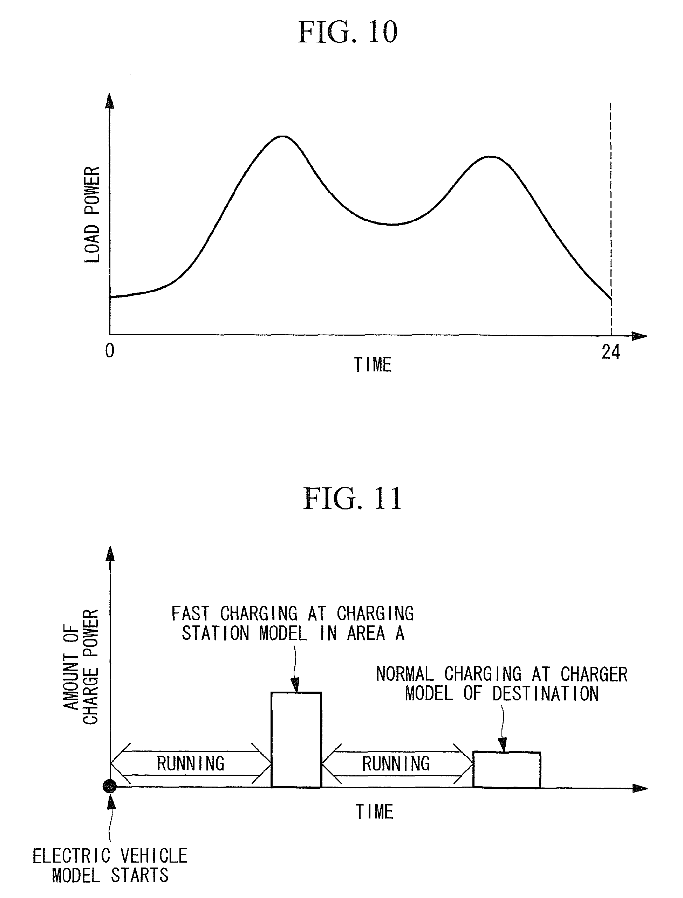

For example, as illustrated in Fig. 9, the road network model 40 is divided into areas having power transmission and distribution from different substations (areas A and B in an example of Fig. 9). Thus, the road traffic flow simulation according to the second embodiment simulates a power transmission and distribution system as illustrated in Fig. 9, and presets a certain value as a maximum generation capacity (MVA) for each power plant (power plants A to C in an example of Fig. 9) and a maximum capacity (MVA) as each substation. In addition, a certain load power pattern changing with time is preset as a load power other than the load for charging the storage battery of the electric vehicle model as illustrated in Fig. 10.

An example of the load power pattern illustrated in Fig. 10 indicates that the load power is large in the morning and in the evening, while the load power is small at night. Note that the load pattern is not limited to this, but may be changed, for example, according to the set weather condition.

For example, the load for charging the storage battery of the electric vehicle model is calculated corresponding to charging at a charging station, charging at each home having an electric vehicle, and charging at an office building or a shopping center.

Specifically, the electric vehicle model is quickly charged to a full charge capacity of a charge value at the charging station (hereinafter referred to as "fast charging"). Meanwhile, charging at a home and charging at an office building or a shopping center are considered to charging at a destination of the electric vehicle model. Thus, assuming that each place has a charger, charging is performed more slowly than fast charging until the storage battery is charged to a full charge capacity (hereinafter referred to as "normal charging"). Note that the charging station model 46 may be provided with a large-capacity storage battery for temporarily storing power in and charging the storage battery of the electric vehicle model and the amount of power received from a commercial electric power system to the storage battery may be calculated.

Thus, in the road network model 40 according to the second embodiment, a charger model simulating a charger for normal charging is arranged beforehand in a place that can be a destination, such as a home, an office building, and a shopping center. The amount of power consumption per unit time is assumed to be different between fast charging by the charging station model and normal charging by the charger. In other word, the power consumption is set larger for fast charging than for normal charging.

Fig. 11 is a graph illustrating the charging process of an electric vehicle model by a relation between the time and the amount of charge power. From Fig. 11, the magnitude of the amount of power charged in the electric vehicle model is known. Thus, in step 104, the road traffic flow simulation according to the second embodiment stores the area charged for each electric vehicle model and the amount of charge power in the RAM 16 or the HDD 18.

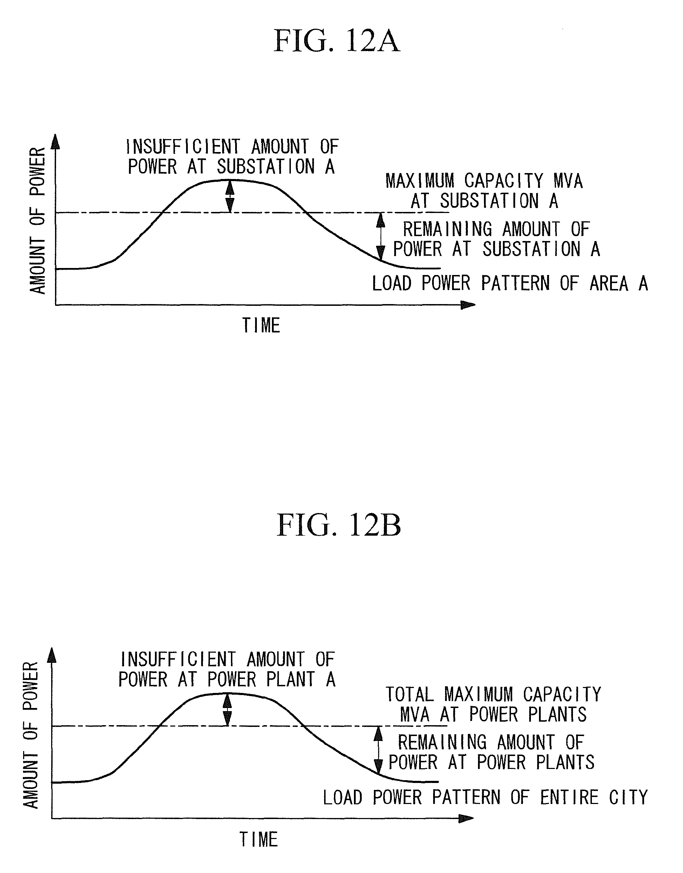

In the process of outputting the simulation results in step 114 of the road traffic flow simulation according to the second embodiment, the load power pattern for each area is calculated based on the area charging for each electric vehicle model and the amount of charge power stored, and for example, a graph indicating the time variation of the load illustrated in Figs. 12A and 12B is outputted.

Fig. 12A is a graph illustrating a time variation of load (load power pattern) for each divided area. The load power pattern for each area is calculated by the sum of a load power pattern of another load for each area and a pattern for charging the storage battery of the electric vehicle model. This makes it possible to know a variation of the insufficient amount of power at a substation for each time of each area and the remaining amount of power at the substation as illustrated in Fig. 12A.

Meanwhile, Fig. 12B is a graph illustrating a time variation of load (load power pattern) of an entire city simulated by the road network model 40.

The load power pattern of the entire city is calculated by the total sum of the load power patterns for each area. This makes it possible to know a variation of the insufficient amount of power at a power plant for each time of the entire city and the remaining amount of power at the power plant as illustrated in Fig. 12B.

Further, when the storage batteries of a plurality of electric vehicle models are simultaneously charged at charging station models 46 and the like, the charging may not be performed due to lack of power depending on the amount of power applied to the area, and thus the road traffic flow simulation according to the second embodiment may calculate the number of times the charging cannot be performed due to lack of power and the time ratio thereof.

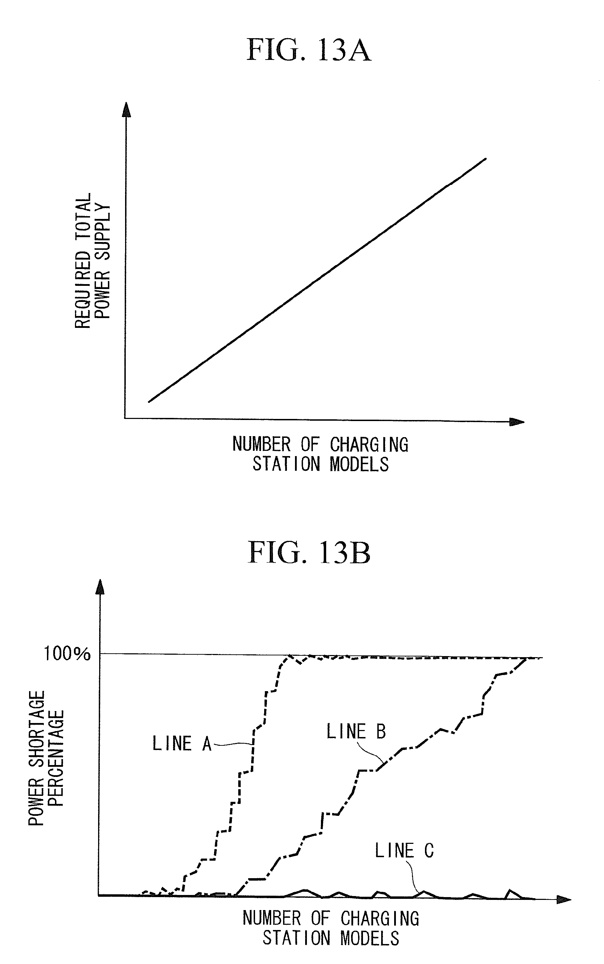

Fig. 13A is a graph illustrating a relation between the required total amount of power supply and the number of charging station models 46 obtained by the road traffic flow simulation.

The required total amount of power supply is a total amount of power required to supply power to the charging station model 46 when a chargeable number of electric vehicle models are simultaneously charged at the charging station model 46. The required total amount of power supply is calculated by the product of the number of charging station models 46 and the power supplied to each charging station model 46.

It is understood from an example of Fig. 13A that the required total power supply increases in proportion to the number of charging station models 46.

Fig. 13B is a graph illustrating a relation between the power shortage percentage and the number of charging station models 46 obtained by the road traffic flow simulation. The power shortage percentage is an insufficient amount of power to be supplied to the charging station model 46, more specifically, a ratio of the time when a power shortage occurs of the total time for a predetermined number of days (one week in an example of Fig. 13B). For example, "power shortage percentage is 20%" means that charging the storage battery of the electric vehicle model fails once every five times due to lack of power.

In Fig. 13B, the power shortage percentage decreases in the order of broken line A, one-dot chain line B, and solid line C. Specifically, line A indicates that the number of charging station models 46 increases due to a shortage of the required total power supply in the area, and an increase in the number of simultaneously charging electric vehicle models leads to an increase in the frequency of power shortage. Meanwhile, line C indicates that the number of charging station models 46 increases due to an increase in the required total power supply in the area, and power shortage hardly occurs against an increase in the number of simultaneously charging electric vehicle models.

From the results of Fig. 13B, an arrangement of actual charging stations can be studied based on the amount of power that can be supplied to the charging stations.

As described above, an index for infrastructure facilities, that is, the amount of power required according to the number of charging stations can be easily obtained by a graph illustrating a relation between the number of charging station models 46 and the required total amount of power supply or a graph illustrating a relation between the number of charging station models 46 and the power shortage percentage.

Note that Figs. 13A and 13B are displayed on the image display unit 22, but the relation between the number of charging station models 46 and the required total amount of power supply or the relation between the number of charging station models 46 and the power shortage percentage are not limited to the graphs like Figs. 13A and 13B. For example, the relation may be displayed in a tabular form on the image display unit 22.

(Modification 1)

Transition from gasoline vehicles to electric vehicles is expected to reduce $CO_2$ emission amount (ton). Thus, the road traffic flow simulation according to modification 1 quantitatively evaluates the amount of $CO_2$ emitted by vehicles including electric vehicles.

In step 114 of the road traffic flow simulation according to modification 1, the $CO_2$ emission amount of an electric vehicle model is set to 0 (zero) and the $CO_2$ emission amount of a gasoline vehicle model is calculated based on the travel distance of the gasoline vehicle model.

The $CO_2$ emission amount of the gasoline vehicle model is calculated based on the following expressions (2) and (3).

$$\text{Fuel consumption} = \text{travel distance} \times \text{average fuel consumption} \quad \ldots \quad (2)$$

$$CO_2 \text{ emission amount} = \text{fuel consumption} \times \text{constant} \quad \ldots \quad (3)$$

The average fuel consumption of the gasoline vehicle model in expression (2) is preset (for example, 30 km/L). The constant in expression (3) is preset as a setting value for calculating the $CO_2$ emission amount from the fuel consumption.

Thus, the $CO_2$ emission amount of the gasoline vehicle model is calculated based on the preset setting value and the travel distance of the gasoline vehicle model.

Then, the road traffic flow simulation according to modification 1 outputs, for example, the relation between the ratio of the number of electric vehicle models to the total number of vehicle models and the $CO_2$ emission amount, and other relations.

Note that the description of modification 1 has been focused on setting the $CO_2$ emission amount of the electric vehicle model to 0 (zero), but the present invention is not limited to this. For example, thermal power plants emit $CO_2$ to generate power to be consumed by the storage battery of the electric vehicle model, and thus the electric vehicle model may also be considered to emit $CO_2$.

Specifically, the $CO_2$ emission amount of the electric vehicle model is calculated based on following expression (4).

$$CO_2 \text{ emission amount} = \text{storage battery consumption} \times \text{constant} \quad \ldots \quad (4)$$

The constant in expression (4) is preset as a setting value for calculating the $CO_2$ emission amount from the storage battery consumption. The constant is set as a value for making the $CO_2$ emission amount of the electric vehicle model less than the $CO_2$ emission amount of the gasoline vehicle model.

As described above, the $CO_2$ emission amount of the electric vehicle model may be calculated based on the constant preset as a value for making it less the $CO_2$ emission amount of the gasoline vehicle model and the storage battery consumption.

(Modification 2)

The road traffic flow simulation according to modification 2 can set initial investment costs (for example, planning + site purchase + designing + material purchase + field work) for constructing a charging station and facility operating costs per year of the charging station.

The road traffic flow simulation according to modification 2 calculates economic benefits obtained by constructing charging stations.

Table 5 illustrates methods of calculating economic benefits obtained by constructing charging stations together with the effects.

{Table 5}

| Calculation methods | Effects |
|---|---|
| Economic benefits 1 = (reduction amount in total travel time of all gasoline vehicle models and electric vehicle models) x unit price per hour) | Travel time reduction enables free use of time |
| Economic benefits 2 = ($CO_2$ reduction amount ton) x (unit price per ton) | $CO_2$ reduction suppresses environmental load |

Note that the amount of reduction in total travel time is a difference in total travel time of all gasoline vehicle models and electric vehicle models in a different number or arrangement of charging station models, that is, all vehicle models. The $CO_2$ reduction amount ton is a difference in $CO_2$ emission amount in a different number or arrangement of charging station models.

Further, the road traffic flow simulation according to modification 2 calculates cost effectiveness benefits several years after construction of the charging stations using any one of calculation models 1 and 2 illustrated in Table 6.

{Table 6}

| Calculation model 1 | Cost effectiveness benefits after X number of years = (economic benefits 1 + economic benefits 2) x X number of years - (initial investment costs + facility operating costs for X number of years) |
|---|---|
| Calculation model 2 | Cost effectiveness benefits after X number of years = function f (X number of years, initial investment costs, facility operating costs, economic benefits 1, economic benefits 2) |

Calculation model 2 is a calculation expression for providing the evaluation with a degree of freedom.

Note that the road traffic flow simulation according to modification 2 may calculate cost effectiveness benefits after X number of years using only one of economic benefits 1 and economic benefits 2.

When the cost effectiveness benefits are calculated by calculation model 1 or calculation model 2 in step 114, for example, a graph of cost effectiveness benefits with the horizontal axis representing the X number of years and the vertical axis representing the cost effectiveness amount after X number of years is displayed on the image display unit 22 or the like.

(Modification 3)

Modification 3 calculates the amount of noise of a vehicle model.

As illustrated in Table 7, the amount of noise of a vehicle model is calculated using one of calculation models 1 and 2 based on the running speed of a gasoline vehicle model and the running speed of an electric vehicle model.

{Table 7}

| Calculation model 1 | Noise amount of one gasoline vehicle model = ∫function f (running speed of gasoline vehicle model) dt |
| | Noise amount of one electric vehicle model = ∫function g (running speed of electric vehicle model) dt |
| | Noise amount in entire city = ∑ noise amount of one gasoline vehicle model + ∑ noise amount of one electric vehicle model |
| Calculation model 2 | Noise amount in entire city = function h (running speed of each gasoline vehicle model, running speed of each electric vehicle model) |

In general, noise of a gasoline vehicle is large and noise of an electric vehicle is small. Thus, the amount of noise in the entire city is reduced by disseminating electric vehicles.

In calculation model 1, function f (running speed of gasoline vehicle model) is defined as a function to have a positive characteristic and use the running speed of a gasoline vehicle model as a variable to obtain the amount of noise, and function g (running speed of electric vehicle model) is defined as a function to have a positive characteristic and use the running speed of an electric vehicle model as a variable to obtain the amount of noise. In calculation model 1, if the running speed of a gasoline vehicle model is the same as that of an electric vehicle model, the amount of noise of the electric vehicle model is calculated so as to reduce the noise of the electric vehicle model. In addition, dt is an infinitesimal time and integral ∫indicates that integration is performed in the range from a starting place to a destination of one vehicle model.

Thus, the amount of noise in the road network model 40, that is, the amount of noise in the entire city is calculated by summing the sum of the amount of noise of each gasoline vehicle model and the sum of the amount of noise of each electric vehicle model.

Meanwhile, calculation model 2 is a calculation expression for providing the evaluation with a degree of freedom.

When the amount of noise is calculated by calculation model 1 or calculation model 2 in step 114, for example, a graph with the horizontal axis representing time and the vertical axis representing the amount of noise at each time point is displayed on the image display unit 22 or the like.

In addition, noise may not be treated as a total amount of noise in the entire city, but as illustrated in Fig. 14A, the amount of noise may be evaluated at a preset evaluation point A.

In this case, the distance between each vehicle model and evaluation point A is calculated to obtain the amount of noise due to the vehicle models, which is added to the amount of noise of all vehicle models around, and then the amount of noise at evaluation point A is calculated, for example, using the following expression (5).

```
The amount of noise at evaluation point A = function F

(running speed of each vehicle model, acceleration/deceleration speed of each vehicle model, distance between the vehicle model and evaluation point A, and

time)... (5)
```

As illustrated in Fig. 14B, time variables are used to simulate variations in the amount of noise (ease of hearing sound) over time in the human auditory such that the sound far away is audible at night, (due to a difference in temperature of the atmosphere), but only nearby sound is audible during daytime.

In the foregoing description, the present invention has been described with reference to the above each embodiment, but the technical scope of the present invention is not limited to the scope described in the above each embodiment. Various modifications or improvements can be made to the above each embodiment without departing from the scope of the present invention, and an embodiment to which the modifications or improvements are made is also included in the technical scope of the present invention.

The above each embodiment has been described assuming that the electric vehicle model has an attribute value indicating the remaining capacity of the storage battery, but the present invention is not limited to this, and the road network model 40 may have an attribute value indicating the remaining capacity of the storage battery of the electric vehicle model and the remaining capacity of the storage battery may be calculated as the attribute value of the road network model 40.

{Reference Signs List}

| 10 | road traffic flow simulation apparatus |
| 12 | CPU |
| 40 | road network model |
| 42 | link |
| 44 | node |
| 46 | charging station model |

**Claims**

1. A road traffic flow simulation apparatus simulating running of vehicle models simulating vehicles in a road network model simulating a road network including a plurality of roads and intersections connecting roads, the road traffic flow simulation apparatus comprising:

   a setting means for setting a ratio of the number of electric vehicle models simulating electric vehicles using a remaining capacity of power charged in storage batteries thereof as an attribute value to a total number of the vehicle models, as well as the number of charging station models for charging the storage batteries of the electric vehicle models and installation positions thereof;
   a calculation means for calculating the remaining capacity of the storage battery of the electric vehicle model running on the road network model;
   a selection means for selecting from the charging station models a charging station model for charging the storage battery corresponding to the electric vehicle model in which a value based on the remaining capacity of the storage battery calculated by the calculation means is less than a predetermined threshold value; and
   a running simulation means for simulating running of the electric vehicle model required to charge the storage battery up to the charging station model selected by the selection means.

2. The road traffic flow simulation apparatus according to claim 1, wherein if a value based on the time required for charging is equal to or greater than a predetermined value in the charging station model selected by the selection means, another charging station model is newly selected from the charging station models.

3. The road traffic flow simulation apparatus according to any one of claims 1 and 2, wherein
   the number of waiting spaces for arranging the electric vehicle models waiting for charging is set in the charging station model, and
   when the number of the electric vehicle models waiting for charging is greater than the number of the waiting spaces in the charging station model, the electric vehicle models are stopped on an adjacent road model.

4. The road traffic flow simulation apparatus according to any one of claims 1 to 3, wherein the selection means selects, as the charging station model to be selected, a charging station model nearest from a current position of the electric vehicle model, a charging station model in a range reachable with the remaining capacity of the storage battery and requiring the shortest detour to a destination; or a charging station model in a range reachable with the remaining capacity of the storage battery and having the lowest power sales unit price.

5. The road traffic flow simulation apparatus according to any one of claims 1 to 4, wherein the calculation means calculates the amount of power consumed by the storage battery based on at least any one of a running speed of the electric vehicle model; an acceleration/deceleration speed, a lamp lighting state, and an air conditioner operating state of the electric vehicle model; and a temperature and a road gradient set in the road network model.

6. The road traffic flow simulation apparatus according to any one of claims 1 to 5, wherein an amount of power charged in the storage battery is calculated.

7. The road traffic flow simulation apparatus according to any one of claims 1 to 6, wherein the $CO_2$ emission amount of a gasoline vehicle model simulating a gasoline vehicle is calculated based on a preset first setting value and a travel distance of the gasoline vehicle model, and the $CO_2$ emission amount of the electric vehicle model is defined as 0 (zero) or calculated based on a second setting value preset as a value smaller than the $CO_2$ emission amount of the gasoline vehicle model and the amount of power consumed by the storage battery of the electric vehicle model.

8. The road traffic flow simulation apparatus according to any one of claims 1 to 7, wherein economic benefits caused by constructing the charging stations are calculated based on at least one of a difference in total travel time of the entire vehicle models and a difference in $CO_2$ emission amount thereof in a different number or arrangement of the charging station models.

9. The road traffic flow simulation apparatus according to any one of claims 1 to 8, wherein noise of running vehicles is calculated based on a running speed of a gasoline vehicle model simulating a gasoline vehicle and a running speed of the electric vehicle model.

10. The road traffic flow simulation apparatus according to any one of claims 1 to 9, wherein a display means displays a relation between the time required for the electric vehicle model to travel from a starting point to a destination and the number of the charging station models or arrangement positions thereof.

11. The road traffic flow simulation apparatus according to any one of claims 1 to 10, wherein a display means displays a relation between the number of the charging station models and an amount of power required to be supplied to the charging station models; or a relation between the number of the charging station models and an insufficient amount of power to be supplied to the charging station models.

12. A road traffic flow simulation program for use in a road traffic flow simulation apparatus simulating running of vehicle models simulating vehicles in a road network model simulating a road network including a plurality of roads and intersections connecting roads, the road traffic flow simulation program causing a computer to function as:

a setting means for setting a ratio of the number of electric vehicle models simulating electric vehicles using a remaining capacity of power charged in storage batteries thereof as an attribute value to a total number of the vehicle models, as well as the number of charging station models for charging the storage batteries of the electric vehicle models and installation positions thereof;
a calculation means for calculating the remaining capacity of the storage battery of the electric vehicle model running on the road network model;
a selection means for selecting from the charging station models a charging station model for charging the storage battery corresponding to the electric vehicle model in which a value based on the remaining capacity of the storage battery calculated by the calculation means is less than a predetermined threshold value; and
a running simulation means for simulating running of the electric vehicle model required to charge the storage battery up to the charging station model selected by the selection means.

13. A road traffic flow simulation method for simulating running of vehicle models simulating vehicles in a road network model simulating a road network including a plurality of roads and intersections connecting roads, the road traffic flow simulation method comprising:

a first step of setting a ratio of the number of electric vehicle models simulating electric vehicles using a remaining capacity of power charged in storage batteries thereof as an attribute value to a total number of the vehicle models, as well as the number of charging station models for charging the storage batteries of the electric vehicle models and installation positions thereof;
a second step of calculating the remaining capacity of the storage battery of the electric vehicle model running on the road network model;
a third step of selecting from the charging station models a charging station model for charging the storage battery corresponding to the electric vehicle model in which a value based on the remaining capacity of the storage battery calculated by the second step is less than a predetermined threshold value; and
a fourth step of simulating running of the electric vehicle model required to charge the storage battery up to the charging station model selected by the third step.

# FIG. 1

10

12 CPU

14 ROM

16 RAM

18 HDD

20 OPERATION INPUT UNIT

22 IMAGE DISPLAY UNIT

24 EXTERNAL INTERFACE

26 PORTABLE STORAGE MEDIUM

28 READ UNIT

30

FIG. 2

FIG. 3

```
                    ( START )
                        │
                        ▼
           ┌────────────────────────┐
           │ SET ROAD NETWORK MODEL │──── S100
           └────────────────────────┘
                        │
                        ▼
           ┌────────────────────────┐
           │ INITIALIZE VEHICLE MODEL │──── S102
           └────────────────────────┘
                        │
                        ▼
           ┌────────────────────────┐
           │   SIMULATE BEHAVIOR     │──── S104
           │   OF VEHICLE MODEL      │
           └────────────────────────┘
                        │
                        ▼         S106
                   ╱ ARE ╲                    YES
                 ╱ ENDING CONDITIONS ╲──────────────┐
                 ╲   SATISFIED?      ╱              │
                   ╲     ╱                          │
                    │ NO                            │
                    ▼                               │
           ┌────────────────────────┐               │
           │ DETERMINE CHARGING NECESSITY │── S108   │
           └────────────────────────┘               │
                        │                           │
                        ▼        S110               │
             NO   ╱ IS A CHARGING ╲                 │
         ◄───────╱ REQUIRED ELECTRIC VEHICLE ╲      │
                 ╲   MODEL FOUND?   ╱               │
                   ╲     ╱                          │
                    │ YES                           │
                    ▼                               │
           ┌────────────────────────┐               │
           │ PERFORM SIMULATION SETTING │── S112     │
           │   FOR CHARGING PROCESS   │             │
           └────────────────────────┘               │
                                                    │
                        ┌───────────────────────────┘
                        ▼
           ┌────────────────────────┐
           │ OUTPUT SIMULATION RESULTS │── S114
           └────────────────────────┘
                        │
                        ▼
                    ( END )
```

# FIG. 4

TRAVELABLE RANGE WITH
REMAINING STORAGE
BATTERY CAPACITY

DESTINATION

CHARGING
STATION
MODEL A

TRAVEL
ROUTE A

TRAVEL
ROUTE B

TRAVEL
ROUTE B

TRAVEL
ROUTE A

CURRENT POSITION OF
CHARGING REQUIRED
EV MODEL

CHARGING
STATION
MODEL B

# FIG. 5

NUMBER OF (THREE)
WAITING SPACES

NUMBER OF (THREE)
CHARGING STANDS

NUMBER OF (THREE)
VEHICLE MODELS
EXCEEDING THE
NUMBER OF
WAITING SPACES

FREE
FLOW

42

46

FREE FLOW

FREE FLOW

FREE
FLOW

DECELERATING

EP 2 660 791 A1

# FIG. 6

FIG. 7A

TRAFFIC FLOW RATE Q
(NUMBER OF VEHICLES/TIME)

GRADIENT $\alpha$

DENSITY K
(NUMBER OF VEHICLES/Km)

FIG. 7B

TRAFFIC FLOW RATE Q
(NUMBER OF VEHICLES/TIME)

GRADIENT $\alpha$

DENSITY K
(NUMBER OF VEHICLES/Km)

FIG. 7B

TRAFFIC FLOW RATE Q
(NUMBER OF VEHICLES/TIME)

GRADIENT $\alpha$

DENSITY K
(NUMBER OF VEHICLES/Km)

FIG. 8A

TOTAL TRAVEL TIME

A  B  C  D  E

NUMBER OF CHARGING STATION MODELS

FIG. 8B

TOTAL TRAVEL TIME

EVEN
ARRANGEMENT

CONCENTRATED
ARRANGEMENT

ARRANGEMENT
ACCORDING TO
TRAFFIC FLOW

ARRANGEMENT POSITIONS OF CHARGING STATION MODELS

# FIG. 9

# FIG. 10

# FIG. 11

# FIG. 12A

INSUFFICIENT AMOUNT OF POWER AT SUBSTATION A

MAXIMUM CAPACITY MVA AT SUBSTATION A

REMAINING AMOUNT OF POWER AT SUBSTATION A

LOAD POWER PATTERN OF AREA A

AMOUNT OF POWER

TIME

# FIG. 12B

INSUFFICIENT AMOUNT OF POWER AT POWER PLANT A

TOTAL MAXIMUM CAPACITY MVA AT POWER PLANTS

REMAINING AMOUNT OF POWER AT POWER PLANTS

LOAD POWER PATTERN OF ENTIRE CITY

AMOUNT OF POWER

TIME

## FIG. 13A

REQUIRED TOTAL POWER SUPPLY

NUMBER OF CHARGING STATION MODELS

## FIG. 13B

POWER SHORTAGE PERCENTAGE

100%

LINE A

LINE B

LINE C

NUMBER OF CHARGING STATION MODELS

## FIG. 14A

EVALUATION
POINT A

DISTANCE

42

44

☐ ; VEHICLE MODEL

## FIG. 14B

NOISE AMOUNT

0                          24

TIME

<div align="center">

**INTERNATIONAL SEARCH REPORT**

</div>

| | International application No. |
|---|---|
| | PCT/JP2011/078823 |

**A. CLASSIFICATION OF SUBJECT MATTER**
*G08G1/00(2006.01)i*

According to International Patent Classification (IPC) or to both national classification and IPC

**B. FIELDS SEARCHED**

Minimum documentation searched (classification system followed by classification symbols)
G08G1/00

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| P,A | JP 2011-238182 A (Central Research Institute of Electric Power Industry), 24 November 2011 (24.11.2011), paragraphs [0014] to [0016], [0051] to [0057] (Family: none) | 1-13 |
| A | JP 2007-170927 A (Aisin AW Co., Ltd.), 05 July 2007 (05.07.2007), paragraphs [0063] to [0089] (Family: none) | 1-13 |
| A | JP 2008-162394 A (Railway Technical Research Institute), 17 July 2008 (17.07.2008), paragraphs [0024], [0036] to [0068] (Family: none) | 1-13 |

| [X] Further documents are listed in the continuation of Box C. | [ ] See patent family annex. |
|---|---|

\* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 07 March, 2012 (07.03.12) | 19 March, 2012 (19.03.12) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.

PCT/JP2011/078823

C (Continuation). DOCUMENTS CONSIDERED TO BE RELEVANT

| Category* | Citation of document, with indication, where appropriate, of the relevant passages | Relevant to claim No. |
|---|---|---|
| A | JP 2001-183150 A (Nissan Motor Co., Ltd.), 06 July 2001 (06.07.2001), paragraphs [0069] to [0092] (Family: none) | 1-13 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4506663 B